(19) Europäisches Patentamt
European Patent Office
Office européen des brevets

(11) Publication number: **0 093 808**
**B1**

(12) # EUROPEAN PATENT SPECIFICATION

(45) Date of publication of patent specification: **29.10.86**

(51) Int. Cl.$^4$: **A 23 K 1/17**

(21) Application number: **82302306.4**

(22) Date of filing: **06.05.82**

(54) **A method for improving the weight gain and feed utilisation efficiency of pigs.**

(43) Date of publication of application:
**16.11.83 Bulletin 83/46**

(45) Publication of the grant of the patent:
**29.10.86 Bulletin 86/44**

(84) Designated Contracting States:
**CH DE FR LI NL SE**

(56) References cited:
**GB-A-2 097 670**
**US-A-4 186 206**
**US-A-4 206 224**

(73) Proprietor: **BEECHAM GROUP PLC**
**Beecham House Great West Road**
**Brentford Middlesex TW8 9BD (GB)**

(72) Inventor: **Frood, Ian James Macaulay**
**Old Hall Farm**
**Corringham Essex (GB)**

(74) Representative: **Hardman, Carol Pauline et al**
**Beecham Pharmaceuticals**
**Great Burgh Yew Tree Bottom Road**
**Epsom Surrey KT18 5XQ (GB)**

**The file contains technical information submitted after the application was filed and not included in this specification**

**EP 0 093 808 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the use of pseudomonic acid, its salts and esters, as growth promoting agents for livestock.

UK Patent No. 1 395 907 discloses pseudomonic acid, of formula

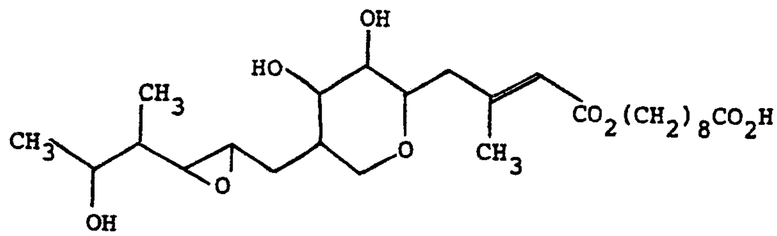

and salts and esters thereof.

United States Patent No. 4,206,224 discloses the use of pseudomonic acid or a pharmaceutically acceptable salt or alkyl ester thereof in the treatment of respiratory and venereal diseases caused by Haemophilus and Neisseria organisms in mammals. It also states that it may be employed generally as a growth promoter in animals.

United States Patent No. 4 186 206 discloses the use of pseudomonic acid or a salt or ester thereof in the treatment and prophylaxis of swine dysentery disease.

It has now been found that pseudomonic acid, its alkali metal and alkaline earth metal salts and its methyl ester, are surprisingly active as growth promoting agents for pigs.

According to the present invention there is provided a method for improving the weight gain and feed utilisation efficiency of pigs, which method comprises administering pseudomonic acid or an alkali metal or alkaline earth metal salt or methyl ester thereof to a pig in feedstuff in an amount of less than 100 ppm of the total feedstuff.

Preferably pseudomonic acid, sodium pseudomonate or methyl pseudomonate are used in the method of the present invention.

Pseudomonic acid, its alkali metal or alkaline earth metal salts and its methyl ester are particularly suitable for improving the weight gain and feed utilisation efficiency of pigs.

For administration in feedstuff the drugs are conveniently formulated as a premix in association with a suitable carrier.

Suitable carriers are inert conventional agents such as powdered starch. Other conventional feedstuff premix carriers may also be employed.

Pseudomonic acid and the salts and ester, may conveniently be produced by fermentation of Pseudomonas Fluorescens (NCIB 1086) as disclosed in UK Patent No. 1 395 907. Modifications of this process are described in US Patent No. 4 222 942 and European Patent Application No. 0 005 614.

For use in the present invention, pseudomonic acid and the salts and ester may be purified by techniques such as those described in the aforementioned patents, however, it may be uneconomic to undertake such purification and in this case crude pseudomonic acid and the salts and ester thereof, may be employed, or the bacterial broth or solids thereof from fermentation of Pseudomonas Fluorescens (NCIB 10586) may be used directly.

The present invention will now be illustrated with reference to the following Example:

Example 1

Groups of pigs [8 or 10 Landrace x Large White c.a. 20 kg each, (equal numbers of females and castrate males) per group] were assigned to each of the following treatments:

| Treatment | g/tonne (free acid equivalent) |
|---|---|
| 1 Negative control | — |
| 2 Sodium pseudomonate | 25 |
| 3 Sodium pseudomonate | 40 |

The pigs were fed *ad libitum* and weighed weekly for a period of six weeks.

The results of the experiment were as follows:

| Treatment | Kg wt gain per pig | % improvement over negative control | Kg feed per kg weight gain | % improvement of feed utilisation efficiency over negative control |
|---|---|---|---|---|
| 1 | 29.30 | — | 3.142 | — |
| 2 | 31.40 | +7.1 | 3.046 | +3.1 |
| 3 | 30.92 | +5.5 | 3.044 | +3.2 |

**Claims**

1. A method for improving the weight gain and feed utilisation efficiency of pigs, which method comprises administering pseudomonic acid or an alkali metal or alkaline earth metal salt or methyl ester thereof to a pig in feedstuff in an amount of less than 100 ppm of the total feedstuff.

2. A method according to claim 1 wherein pseudomonic acid or the sodium salt thereof is administered to pigs.

3. A method according to claim 1 wherein the pseudomonic acid or an alkali metal or alkaline earth metal salt or methyl ester thereof is administered as a feedstuff premix in association with a conventional feedstuff premix carrier.

**Patentansprüche**

1. Ein Verfahren zur Verbesserung der Gewichtszunahme und des Wirkungsgrades der Futterverwertung bei Schweinen welches Verfahren das Verabreichen von Pseudomonsäure oder eines Alkalimetall- oder Erdalkalimetallsalzes oder Methylesters derselben an ein Schwein zusammen mit dem Futter in einer Menge von weniger als 100 TpM der gesamten Futtermenge umfaßt.

2. Ein Verfahren gemäß Anspruch 1, in welchem Pseudomonsäure oder das Natriumsalz derselben an Schweine verabreicht wird.

3. Ein Verfahren gemäß Anspruch 1, in welchem die Pseudomonsäure oder ein Alkalimetall- oder Erdalkalimetallsalz oder ein Methylester derselben als Futtervormischung in Verbindung mit einem herkömmlichen Futtervormischungsträger verabreicht wird.

**Revendications**

1. Méthode pour améliorer la prise de poids et l'efficacité de l'utilisation de l'alimentation des porcs, laquelle méthode comprend l'administration de l'acide pseudomonique ou d'un sel de métal alcalin ou d'un métal alcalino-terreux ou de l'ester méthylique de celui-ci, à un porc dans sa nourriture, en une quantité inférieure à 100 ppm de la pâtée totale.

2. Méthode suivant la revendication 1, dans laquelle l'acide pseudomonique ou son sel de sodium est administré à des porcs.

3. Méthode suivant la revendication 1, dans laquelle l'acide pseudomonique ou un sel de métal alcalin ou de métal alcalino-terreux ou l'ester méthylique de celui-ci, est administré sous forme d'un pré-mélange alimentaire en association à un support classique de pré-mélange alimentaire.